# EUROPEAN PATENT SPECIFICATION

(11) **EP 0 789 103 B1**
(45) Date of publication and mention of the grant of the patent: **07.07.2004**
(21) Application number: 96500167.0
(22) Date of filing: 27.12.1996
(51) Int. Cl.: D06F 37/00

(54) **Plastic tank for washing machine**
Laugenbehälter aus Kunststoff für Waschmaschine
Cuve en plastique pour machine à laver

(30) Priority: 31.01.1996 ES 9600221
(43) Date of publication of application: 13.08.1997
(73) Proprietor: BSH Balay, S.A., 50059 Zaragoza (ES)
(72) Inventor: Boved, Ismael Gracia, 50059 Zaragoza (ES)
(74) Representative: Richter, Harald, Dr.

(56) References cited:
- EP-A- 0 198 554
- EP-A- 0 219 115
- WO-A-95/17543
- GB-A- 2 272 913
- US-A- 5 329 791

## Description

### OBJECT OF THE INVENTION

As is expressed in the title of this specification, the following invention consists of an improved plastic tub for washing machines, so that the improvements are based on the execution of the housing of the bearings in the tub from the same plastic material thereof, and said housing of the bearings being defined in the manufacturing process of the tub, or by means of an independent body, which can be fixed to the tub and removed therefrom.

Thus, starting from the premise that plastics under load become deformed and much more so with an increase in temperature, the difficulty arises in the manufacture of plastic tubs for automatic washing machines in making the housing of the bearings from the same material as the tub, for which reason, hereinafter, the aim was to manufacture a plastic tub with the housing of the bearings made from the same material as the tub unit and to further aim that the bearings, in the case of wear and tear, could be changed independently from the rest of the tub unit.

### FIELD OF APPLICATION

The improvements disclosed in this specification are applicable to plastic tubs, incorporated in front-load automatic washing machines, in which the drum, in relation to its internal base, is joined to the corresponding rotation spindle which transmits the spinning movement to it from the corresponding drive motor to perform the different operations to wash the clothes contained in the tub or drum whose lateral surface contains holes and is encased by the tub.

### BACKGROUND OF THE INVENTION

With the passing of time, the laborious task of washing clothes has undergone a great evolution, the current automatic washing machines decisively influencing in this, as washing clothes by hand, or using the old turbine washing machines, which only caused the agitation of the clothes, is in no was similar to the current way of washing dothes with automatic washing machines which, logically, have undergone a series of important changes, amongst which we can state the incorporation of a plastic tub, replacing that steel tub.

In addition, as is widely known, and as we have indicated, plastics under load become deformed and much more so with an increase in temperature, i.e. the greater the temperature the greater the deformation, so that with this premise, in automatic washing machines that incorporate a plastic tub, the housing of the bearings is formed by a metal bushing (i.e. see in EP 0 198 554 A2), and even more so taking into account the temperature to which the water should be heated to wash effectively and the physical, mechanical and dynamic efforts to which the tub is subjected.

In this way, the metal bushing is incorporated in the manufacturing process of the plastic tub to be subsequently mounted in the corresponding washing machine, housing the bearings, which permit the drum to spin. In this case, there is the drawback that the metal bushing, before being incorporated the plastic tub, requires very precise machining which involves a very high cost.

However, in any case, this is not the worst drawback of automatic washing machines that incorporate a plastic tub, the worst drawback occurs when the bearings wear, which generally implies the wear and tear of the bearing tracks of the metal bushing, as, in this case, the whole tub-bushing-bearing unit should be changed, with the high cost this represents.

If this is not done in this manner, i.e. the whole unit is not changed when the bearings wear, and only said bearings are changed, what eventually occurs is that the new bearings, within a short period of time, create tracks in the metal bushing, the only remaining solution being the aforementioned one of changing the whole tub-bushing-bearing unit.

In view of these problems, we aimed to obtain, in the plastic tub, housing for the bearings made of the same material as the tub, and furthermore, that the bearing housing mechanism was independent from the tub and interchangeable, which would avoid said post-sale problems.

### DESCRIPTION OF THE INVENTION

In accordance with that stated in the background of the invention, the aim was to obtain plastic housing for the drum spindle bearings, so that said housing formed part of the plastic tub, or, rather, was an independent part thereof, bearing in mind said premise that plastic under load become deformed, and much more so with an increase in temperature, and we should bear in mind that that water is heated to high temperatures during the washing process.

Thus, the improvements introduced in the plastic tub for automatic washing machines is based on the incorporation of a metal reinforcement in relation to the plastic tubular body of the tub which is placed in relation to the pitch of the drum rotation spindle with the interposition of the corresponding bearings.

In this way, the conventional metal bushing used for the housing of the bearings and which requires important dimensional requirements, for which reason it should be machined with great precision, implying therein a considerable increase in cost, is replaced by a simple metal reinforcement which does not require precise machining nor has dimensional requirements, and can be obtained from a standard tube with welding and "decolletage" cut, which represents an important financial saving.

The metal reinforcement is incorporated in relation to the plastic tubular body of the tub that is positioned in relation to the pitch of the drum rotation spindle and which is incorporated in the plastic tub manufacturing process, encased in the plastic material, defining the inner surface thereof of the housing where the bearings are located.

From this basic idea, a series of possible variants arise that, furthermore, represent an improvement with respect to this idea and thus, a variant of embodiment consisting of manufacturing a plastic tub which is obtained from a mould with an over-injected bushing in relation to the tubular body which is positioned in relation to the pitch of the rotation spindle, which is metal [aluminium or ZAMAK® (high-grade zinc alloy)] and has a threaded area to which a plastic bushing, also threaded, is screwed, and which, in turn, will have the bearings and the catch, which are easily replaced, inserted therein.

In this execution, the plastic tub is manufactured so that the tubular body that acts as a casing of the rotation spindle of the drum is slightly conical, so that when the piece of plastic that houses the pair of bearings is inserted and arranged with the interposition of the piece of threaded ZAMAK® or aluminium, it penetrates exerting slight pressure.

Another manufacturing variant consists of the execution of a plastic tub with the body encasing the rotation spindle of the drum, being slightly conical, and with a final thread obtained from the mould.

Hereinafter, the encasing body which will house the bearings is defined by a tubular body wherein the bearings will be housed and it is provided with a thread at its inner end and on its outer surface, with a conical ZAMAK® or aluminium bushing which will previously be mounted to the tubular body which houses the bearings, positioned between said tubular body and the body of the plastic tub.

In this way, the conical ZAMAK® or aluminium bushing does not need special requirements, which lowers its cost and, due to its structure, means that when threading the encasing tubular body which houses the bearings when threading the tub casing, it is perfectly anchored without causing wear and tear in the plastic tubular body which houses the bearings as it has the reinforcement of the conical ZAMAK® or aluminium bushing.

This execution presents a simple modification which is based on the execution of the non-threaded tubular casing of the tub, maintaining the conical ZAMAK® or aluminium bushing and the plastic tubular body to house the bearings, maintaining the thread in the inner end in relation to its outer surface, to fix it by means of a removable nut that is positioned in the rear part of the tub.

Depending on the technical necessities as well as on the possible manufacturing costs, a new variant of execution consists of starting with a plastic tub as has been mentioned above, wherein the tubular body encasing the drum spindle has a final thread obtained in the manufacturing process of the plastic tub in relation to its inner rear part, and the incorporation of a simple ZAMAK® or aluminium bushing, provided with a thread to fix it to the plastic tub in relation to its rear outer surface, with the ZAMAK® or aluminium bushing housing the bearings.

Likewise, this solution admits a variant of execution in which the tub body is not threaded in its rear part and the ZAMAK® or aluminium bushing is fixed by means of a plastic or metal nut, inserted in the tub or clipped in a removable manner and with anti-turn catch to keep the bushing secure.

To complement the following description that will be made hereunder, and for the purpose of helping towards a better understanding of the characteristics of the invention, a set of drawings is attached to said specifications, wherein the most characteristic details of the invention are represented in its figures with an illustrative, non-limiting character.

### BRIEF DESCRIPTION OF THE DRAWINGS

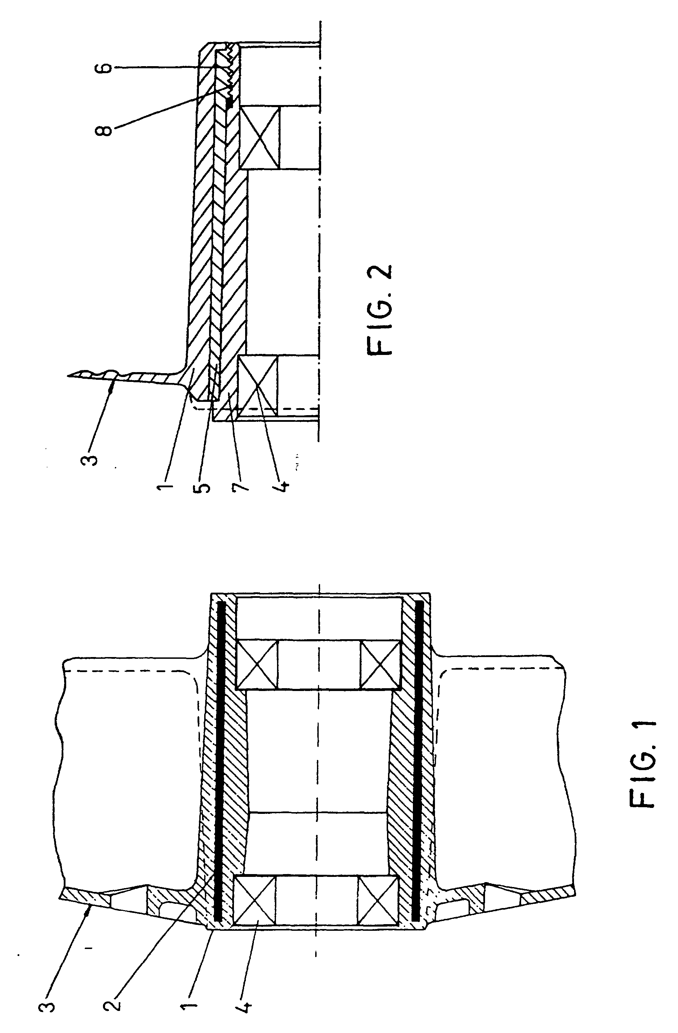

The following drawings show in
- Figure 1: a sectional view of the tubular body of the plastic tub, which houses the bearings, for the rotation spindle of the drum to pass through, in which one can see the conventional metal bushing, incorporated in the manufacturing process of the tub, which encases and reinforces the plastic wall casing of little thickness,
- Figure 2: a sectional view of the slightly conical tubular body of the plastic tub, obtained by moulding, with an over-injected metal bushing, which has a threaded rear end to which a plastic bushing, which houses the pair of bearings, is fixed,

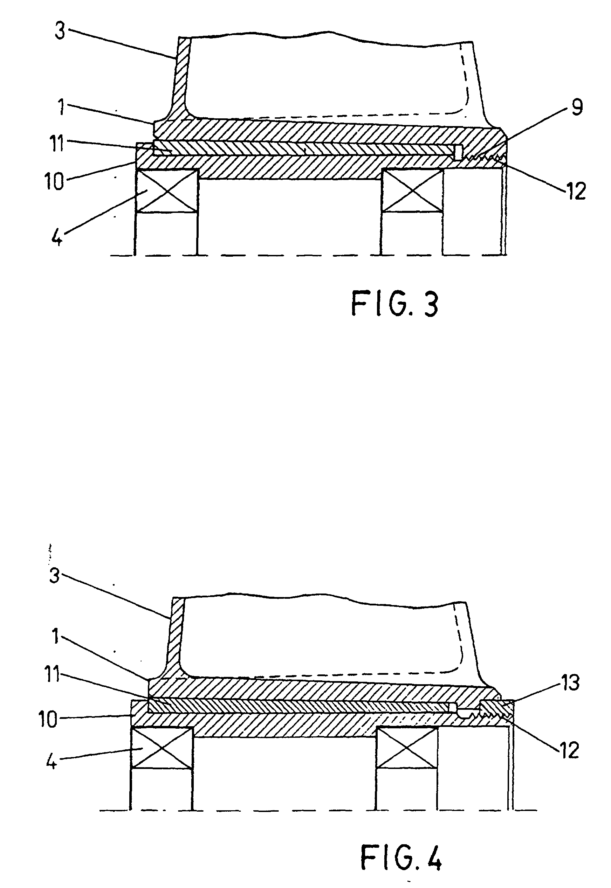

- Figure 3: a sectional view of the tubular body of the plastic tub, with its rear part threaded on its inner surface, which houses a conical, ZAMAK® or aluminium bushing, and a tubular plastic body which houses the bearings, and which, as it is threaded on the outer surface of its rear end, permits it to be fixed to the tub body,
- Figure 4: a sectional view of the tubular body which encases the plastic tub through which the rotation spindle of the drum, which houses the aluminium or ZAMAK® bushing, as well as the tubular plastic body which houses the bearings, pass and as it being threaded in relation to the outer surface of its rear end, permits it to be fixed by means of a plastic or metal removable nut, which will be dipped on to the rear part of the tub,

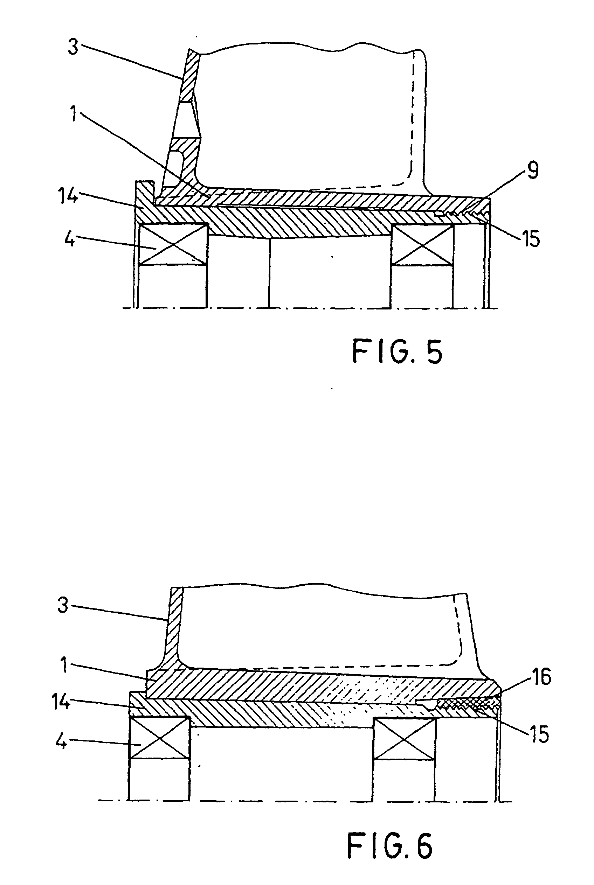

- Figure 5: a sectional view of the tubular body of the plastic tub with the rear part of its outer surface threaded, and in which a ZAMAK® or aluminium bushing is housed which, in turn, houses the bearings and is threaded in the outer surface of the rear end in order to be screwed to the tub, and
- Figure 6: a sectional view of the tubular body of the plastic tub, with the ZAMAK® or aluminium bushing which houses the bearings, and which is threaded in the outer surface of its rear end, to be fixed by means of a removable nut, inserted in the tub or clipped on.

### DESCRIPTION OF A PREFERRED EMBODIMENT

In view of the commented figures, and in accordance with the adopted numbering, one can see how the encasing plastic tubular body 1, in relation to which the washing machine drum rotation spindle is positioned, is provided with a metal tubular reinforcement 2 which is incorporated during the manufacturing process of the plastic tub 3.

The pair of bearings 4 which will permit the drum spindle to pass through and rotate thereof with respect to the plastic tub 3 will be mounted in the inner side of the tubular body 1.

In this manner, the metal reinforcement 2, does not need dimensional requirements, and can be obtained from a standard tube with welding and "decolletage" cut, which permits the elimination of the conventional metal reinforcement, which requires very precise machining thus increasing its cost. There is therefore a considerable financial saving.

The tubular body 1 thus houses the bearings 4, not producing any deformation thereof, even with the increase in temperature produced by heating the water for washing produced in said tubular body 1.

From this first idea, a series of possible variants of execution arise which permit the incorporation of an interchangeable element, which in the case of wear and tear of the bearings, facilitates them being changed for a new element without having to change the whole tub as normally occurs.

The plastic tub 3, can thus be obtained with the slightly conical tubular body 1, in relation to which the drum spindle passes, and obtained by moulding, with an over-injected metal bushing 5 (aluminium or ZAMAK®) provided with a threaded area 6 in its rear part to which a plastic bushing 7 is fixed. This has a threaded area 8 to fix it and, in turn, will house the pair of bearings 4 and the catch. This bushing is easily replaced.

In addition, the plastic tub 3, can be obtained with the tubular body 1 in relation to which the drum spindle passes in its rear part, defining a thread 5 obtained from the mould, and the plastic body 6 which houses the bearings 4 will be screwed to the plastic tub with the interposition of a slightly trunco-conical shaped ZAMAK® or aluminium bushing 11, so that on mounting the plastic body 10, the bushing 11 acts as a perfect reinforcement.

The bushing 11 will be previously mounted on the tubular body 10, and it requires no special dimensional requirements and can come out of the mould without specific complications, for which reason its cost is minimal.

In this way, the plastic tubular body 10 houses the pair of bearings 4 therein, and it is made so that there is a thread 12 for it to be screwed to the body of the tub 3 in relation to the outer surface of its rear base, on manufacturing it with a thread 9 on the rear end of the tubular body 1 threaded. The thread is obtained from the mould.

This disclosed execution presents a simple variation in which the tubular body 1, in relation to which the drum spindle passes is non-threaded, whilst its conserves the slightly trunco-conical ZAMAK® or aluminium bushing 11 and the tubular plastic body 10 which houses the pair of bearings 4 therein, and which has a thread 12 on the outer surface of its rear end so that its fixing is performed by means of a rear nut 13 and clipped to the rear part of the tub 3.

Thus, in both executions, the slightly trunco-conical bushing 11, acts as reinforcement and the plastic tubular 10 body houses the pair of bearings 4 therein, perfectly fixing it when the body 10 is threaded as a consequence of the bushing 11 structure acting as a wedge.

Another variant of execution is based on the manufacture of the plastic tub 3, with its tubular body 1, through which the drum spindle passes, provided with a thread 9 in its inner rear side, and a ZAMAK® or aluminium tubular body 14 with a thread 15 in the outer surface of its rear end, through which it is joined to the plastic tub 3 will be fixed by threading thereof. The ZAMAK® or aluminium tubular body 14 will house the pair of bearings 4 therein.

Likewise, this execution has a small variant in that, while maintaining the ZAMAK® or aluminium tubular body 14 which houses the pair of bearings 4 therein and which is threaded 15 in relation to the outer surface of its rear end, the tubular body 1 of the plastic tub 3 through which the drum spindle passes, is non-threaded, and it is fixed by means of a plastic or metal nut 16, inserted in the tub 3 or clipped on in a removable manner, and with an anti-turn catch which will maintain it secured to the tubular bushing 14.

In short, by means of the metal reinforcement which is embedded in the plastic material in the manufacturing process of the tub, the housing of the bearings in the plastic tubular body 1 is permitted, withstanding the efforts produced in the washing process without any problems.

Furthermore, with the incorporation of a casing or independent tubular body that can be fixed to the tub body, the bearings 4 can be changed, in case of wear and tear thereof, either directly or by means of a nut without the need to change any other element, which represents a great advantage.

## Claims

1. Plastic tub for washing machine, being of the kind of the plastic tubs that wrap a drum for the lodging of clothes which are going to be washed so that the frontal side of said tub (3) is open and its back side is closed, being provided with a central conduit formed by a tubular body (1) of the tub (3) for the pass of a spindle of the drum, with means of reinforcement (2) of the tubular body (1), and with bearings (4) for the support of the spindle of the drum, **characterised in that** the means of reinforcement (2) is totally embedded by the material of the tub (3) and the bearings (4) are lodged in the material of the tub (3).

2. Plastic tub according to claim 1, **characterized in that** the means of reinforcement (2) of the plastic tubular body (1) is defined by a simple metal bushing (2) without machining, which is embedded in the plastic material during the manufacturing process of the tub (3).

3. Plastic tub according to claim 1, **characterized in that** the independent means of reinforcement of the plastic tubular body (1) is defined by an over-injected bushing (5) in the tubular body (1), which is made of metal and has a threaded area (6) in its rear part, wherein a plastic bushing (7) is screwed, with the rear area (8) likewise threaded, and which houses the pair of bearings (4).

4. Plastic tub according to claim 1, **characterized in that** the independent means of reinforcement of the plastic tubular body (1) is defined by a slightly trunco-conical ZAMAK® high-grade zinc alloy or aluminium bushing (11) which is mounted on the tubular body (1) of the plastic tub (3).

5. Plastik tub according to claims 1 and 3, **characterized in that** the means of fixing the slightly trunco-conical reinforcement bushing (11) to the plastic tub (3) is performed by means of an independent tubular body (10) which is positioned inside said trunco-conical bushing (11).

6. Plastic tub according to claims 1 and 4, **characterized in that** the tubular body (1) of the plastic tub (3) has a thread (9) in its rear part.

7. Plastic tub according to claims 1 and 4, **characterized in that** the independent tubular body (10) wherein the trunco-conical bushing (11) is housed has a thread on the outer surface of its rear end.

8. Plastic tub according to claims 1, 5 and 6, **characterized in that** the bushing (11) is fixed by way of a wedge when the tubular body (1) of the plastic tub (3) is threaded.

9. Plastic tub according to claim 1, **characterized in that** the tubular body (1) of the plastic tub (3) has a non-threaded inner surface.

10. Plastic tub according to claims 1, 3, 4 an 8, **characterized in that** the reinforcement bushing (11) is fixed by means of a nut (13) which comes up against the body of the tub and in which the inner plastic tubular body (10), which houses the bearings (4), is threaded.

11. Plastic tub according to claim 1, **characterized in that** the means of reinforcement is formed by a ZAMAK® high-grade zinc alloy or aluminium tubular body (14), provided with a thread (15) in the outer surface of its rear end.

12. Plastic tub according to claims 1, 5 and 10, **characterized in that** the ZAMAK® high-grade zinc alloy or aluminium tubular body (14) is fixed to the tubular body of the tub (1) by means of screwing both bodies directly together.

13. Plastic tub according to claims 1, 8 and 10, **characterized in that** the ZAMAK® high-grade zinc alloy or aluminium tubular body (14) is fixed to the plastic tub (3) by means of a nut (16) inserted in the plastic tub (3) or clipped on in a removable manner.

## Patentansprüche

1. Kunststoffzuber für eine Waschmaschine von der Art von Kunststoffzubern, die eine Trommel zum Anordnen der Kleider, die gewaschen werden sollen, umgibt, so daß die Vorderseite des Zubers (3) offen ist und seine Rückseite geschlossen ist, wobei er mit einem zentralen Kanal, der durch einen röhrenförmigen Körper (1) des Zubers (3) ausgebildet ist, für den Durchgang einer Spindel der Trommel, mit einem Verstärkungsmittel (2) des röhrenförmigen Körpers (1) und mit Lagern (4) zur Halterung der Spindel der Trommel versehen ist, **dadurch gekennzeichnet, daß** das Verstärkungsmittel (2) durch das Material des Zubers (3) vollkommen eingebettet ist und die Lager (4) im Material des Zubers (3) untergebracht sind.

2. Kunststoffzuber nach Anspruch 1, **dadurch gekennzeichnet, daß** das Verstärkungsmittel (2) des röhrenförmigen Kunststoffkörpers (1) durch eine einfache Metallbuchse (2) ohne maschinelle Bearbeitung definiert ist, die beim Herstellungsvorgang des Zubers (3) in das Kunststoffmaterial eingebettet wird.

3. Kunststoffzuber nach Anspruch 1, **dadurch gekennzeichnet, daß** das unabhängige Verstärkungsmittel (2) des röhrenförmigen Kunststoffkörpers (1) durch eine übergespritze Buchse (5) in dem röhrenförmigen Körper (1) definiert ist, die aus Metall hergestellt ist und einen Bereich (6) mit Gewinde an ihrem hinteren Teil aufweist, in das eine Kunststoffbuchse (7) geschraubt ist, deren hinterer Bereich (8) ebenfalls mit einem Gewinde versehen ist und die das Paar Lager (4) einfaßt.

4. Kunststoffzuber nach Anspruch 1, **dadurch gekennzeichnet, daß** das unabhängige Verstärkungsmittel des röhrenförmigen Kunststoffkörpers durch eine leicht kegelstumpfförmige Buchse (11) aus hochwertiger ZAMAK®-Zinklegierung oder Aluminium definiert ist, die an dem röhrenförmigen Körper (1) des Kunststoffzubers (3) angebracht ist.

5. Kunststoffzuber nach einem der Ansprüche 1 oder 3, **dadurch gekennzeichnet, daß** das Mittel zum Befestigen der leicht kegelstumpfförmigen Verstärkungsbuchse (11) an dem Kunststoffzuber (3) mithilfe eines unabhängigen röhrenförmigen Körpers (10) ausgeführt ist, der in der kegelstumpfförmigen Buchse (11) angeordnet ist.

6. Kunststoffzuber nach einem der Ansprüche 1 oder 4, **dadurch gekennzeichnet, daß** der röhrenförmige Körper (1) des Kunststoffzubers (3) in seinem hinteren Teil ein Gewinde (9) aufweist.

7. Kunststoffzuber nach einem der Ansprüche 1 oder 4, **dadurch gekennzeichnet, daß** der unabhängige röhrenförmige Körper (10), der die kegelstumpfförmige Buchse (11) einfaßt, an der Außenfläche seines hinteren Endes ein Gewinde aufweist.

8. Kunststoffzuber nach einem der Ansprüche 1, 5 oder 6, **dadurch gekennzeichnet, daß** die Buchse durch einen Keil befestigt ist, wenn der röhrenförmige Körper (1) des Kunststoffzubers (3) mit Gewinde versehen ist.

9. Kunststoffzuber nach Anspruch 1, **dadurch gekennzeichnet, daß** der röhrenförmige Körper (1) des Kunststoffzubers (3) eine Innenfläche ohne Gewinde aufweist.

10. Kunststoffzuber nach einem der Ansprüche 1, 3, 4 oder 8, **dadurch gekennzeichnet, daß** die Verstärkungsbuchse (11) mithilfe einer Mutter (13) befestigt ist, die an den Körper des Zubers stößt und in die der innere, röhrenförmige Kunststoffkörper (10), der die Lager (4) einfaßt, eingeführt ist.

11. Kunststoffzuber nach Anspruch 1, **dadurch gekennzeichnet, daß** das Verstärkungsmittel durch einen röhrenförmigen Körper (14) aus hochwertiger ZAMAK®-Zinklegierung oder Aluminium ausgebildet ist, der in der Außenfläche seines hinteren Endes mit einem Gewinde (15) versehen ist.

12. Kunststoffzuber nach einem der Ansprüche 1, 5 oder 10, **dadurch gekennzeichnet, daß** der röhrenförmige Körper (14) aus hochwertiger ZAMAK®-Zinklegierung oder Aluminium an dem röhrenförmigen Körper (1) des Zubers durch direktes Zusammenschrauben beider Körper befestigt ist.

13. Kunststoffzuber nach einem der Ansprüche 1, 8 oder 10, **dadurch gekennzeichnet, daß** der röhrenförmige Körper (14) aus hochwertiger ZAMAK®-Zinklegierung oder Aluminium mithilfe einer Mutter (16), die in den Kunststoffzuber (3) eingefügt oder abnehmbar angeklammert ist, an dem Kunststoffzuber (3) befestigt ist.

## Revendications

1. Cuve en plastique pour machine à laver, du type des cuves en plastique qui entourent un tambour destiné à contenir des vêtements à laver, de manière à ce que le côté frontal de ladite cuve (3) soit ouvert et son côté postérieur fermé, étant pourvue d'un conduit central formé par un corps tubulaire (1) de la cuve (3) permettant le passage d'un axe du tambour, avec un moyen de renforcement (2) du corps tubulaire (1) et avec des paliers (4) pour supporter l'axe du tambour, **caractérisée en ce que** le moyen de renforcement (2) est totalement encastré dans le matériau de la cuve (3) et les paliers (4) sont logés dans le matériau de la cuve (3).

2. Cuve en plastique selon la revendication 1, **caractérisée en ce que** le moyen de renforcement (2) du corps tubulaire en plastique (1) est défini par une simple douille métallique (2) sans usinage qui est encastrée dans le matériau plastique pendant le processus de fabrication de la cuve (3).

3. Cuve en plastique selon la revendication 1, **caractérisée en ce que** le moyen indépendant de renforcement du corps tubulaire en plastique (1) est défini par une douille (5) dans le corps tubulaire (1) par-dessus laquelle l'injection est réalisée, qui est en métal et est pourvue d'une zone filetée (6) au niveau de sa partie postérieure, dans laquelle une douille en plastique (7) est vissée, douille dont la zone postérieure (8) est également filetée et qui sert de logement à la paire de paliers (4).

4. Cuve en plastique selon la revendication 1, **caractérisée en ce que** le moyen indépendant de renforcement du corps tubulaire en plastique (1) est défini par une douille (11) en ZAMAK®, un alliage de zinc de haute qualité, ou en aluminium présentant une légère forme de cône tronqué, qui est montée sur le corps tubulaire (1) de la cuve en plastique (3).

5. Cuve en plastique selon les revendications 1 et 3, **caractérisée en ce que** le moyen pour fixer la douille de renforcement (11) présentant une légère forme de cône tronqué sur la cuve en plastique (3) est exécuté à l'aide d'un corps tubulaire indépendant (10) qui est positionné à l'intérieur de ladite douille (11) présentant une légère forme de cône tronqué.

6. Cuve en plastique selon les revendications 1 et 4, **caractérisée en ce que** le corps tubulaire (1) de la cuve en plastique (3) est pourvu d'un filet (9) dans sa partie postérieure.

7. Cuve en plastique selon les revendications 1 et 4, **caractérisée en ce que** le corps tubulaire indépendant (10) dans lequel est logée la douille (11) en cône tronqué est pourvu d'un filet sur la surface extérieure de son extrémité postérieure.

8. Cuve en plastique selon les revendications 1, 5 et 6, **caractérisée en ce que** la douille (11) est fixée au moyen d'un coin lorsque le corps tubulaire (1) de la cuve en plastique (3) est fileté.

9. Cuve en plastique selon la revendication 1, **caractérisée en ce que** le corps tubulaire (1) de la cuve en plastique (3) est pourvu d'une surface intérieure non filetée.

10. Cuve en plastique selon les revendications 1, 3, 4 et 8, **caractérisée en ce que** la douille de renforcement (11) est fixée au moyen d'un écrou (13) qui bute contre le corps de la cuve, et dans laquelle le corps tubulaire en plastique interne (10), qui sert de logement aux paliers (4), est fileté.

11. Cuve en plastique selon la revendication 1, **caractérisée en ce que** le moyen de renforcement est formé par un corps tubulaire (14) en ZAMAK®, un alliage de zinc de haute qualité, ou en aluminium pourvu d'un filet (15) sur la surface extérieure de son extrémité postérieure.

12. Cuve en plastique selon les revendications 1, 5 et 10, **caractérisée en ce que** le corps tubulaire (14) en ZAMAK®, un alliage de zinc de haute qualité, ou en aluminium est fixé sur le corps tubulaire de la cuve (1) en vissant les deux corps directement ensemble.

13. Cuve en plastique selon les revendications 1, 8 et 10, **caractérisée en ce que** le corps tubulaire (14) en ZAMAK®, un alliage de zinc de haute qualité, ou en aluminium est fixé sur la cuve en plastique (3) au moyen d'un écrou (16) inséré dans la cuve en plastique (3) ou encliqueté sur cette dernière de manière amovible.
